# EUROPEAN PATENT APPLICATION

(11) **EP 4 825 704 A1**
(43) Date of publication of application: **21.10.2026**
(21) Application number: 23961492.8
(22) Date of filing: 14.12.2023
(51) Int. Cl.: B62D 6/00, B62D 119/00

(54) **STEERING CONTROL DEVICE AND STEERING CONTROL METHOD**

(71) Applicant: JTEKT CORPORATION, Kariya-shi, Aichi 448-8652 (JP); TOYOTA JIDOSHA KABUSHIKI KAISHA, Toyota-shi Aichi 471-8571 (JP)
(72) Inventor: OYA, Toshiaki, Kariya-shi, Aichi 448-8652 (JP); MATSUDA, Satoshi, Kariya-shi, Aichi 448-8652 (JP); NAMIKAWA, Isao, Kariya-shi, Aichi 448-8652 (JP); SHIMIZU, Yoshinobu, Kariya-shi, Aichi 448-8652 (JP); ANRAKU, Koji, Kariya-shi, Aichi 448-8652 (JP); IIDA, Tomoyuki, Toyota-shi, Aichi 471-8571 (JP); YOSHIDA, Shunsuke, Toyota-shi, Aichi 471-8571 (JP); GOTO, Yuko, Toyota-shi, Aichi 471-8571 (JP)
(74) Representative: Winter, Brandl - Partnerschaft mbB
(86) International application number: PCT/JP2023/044879
(87) International publication number: WO 2025/126428

(57) **Abstract**

The steering control device is configured to execute a blocking force applying process and a blocking force limiting process in a state in which steered wheels and a steering shaft are mechanically separated. The blocking force applying process is a process of applying a blocking torque to the steering shaft by operating a motor, the blocking torque being a torque that inhibits a driver from rotating the steering shaft. The blocking force limiting process is a process of limiting the magnitude of the blocking torque toward a smaller side when a force applied by the driver to the steering shaft weakens while the blocking force applying process is being executed.

## Description

### TECHNICAL FIELD

The present disclosure relates to steering control devices and steering control methods.

### BACKGROUND ART

Patent Document 1 below discloses a control device that controls torque applied by a motor to a steering shaft in a state in which power transmission between the steering shaft and steered wheels is cut off. When the rotation angle of a steering wheel approaches an upper limit value, the control device executes a process of applying, from the motor to the steering shaft, torque that inhibits the driver from further increasing the steering angle.

### Related Art Documents

### Patent Documents

Patent Document 1: Japanese Unexamined Patent Application Publication No. 2023-19704 (JP 2023-19704 A)

### SUMMARY OF THE INVENTION

### Problem to be Solved by the Invention

However, if the driver releases the steering wheel while such inhibiting torque is being applied to the steering shaft as described above, the steering wheel may be displaced at an excessively high speed.

### Means for Solving the Problem

One aspect of the present disclosure provides a steering control device. The steering control device is configured to execute a blocking force applying process and a blocking force limiting process in a state in which a steered wheel and a steering shaft are mechanically separated. The blocking force applying process is a process of applying a blocking torque to the steering shaft by operating a motor, the blocking torque being a torque that inhibits a driver from rotating the steering shaft. The blocking force limiting process is a process of limiting the magnitude of the blocking torque toward a smaller side when a force applied by the driver to the steering shaft weakens while the blocking force applying process is being executed.

Another aspect of the present disclosure provides a steering control method. The steering control method includes a step of executing a blocking force applying process and a blocking force limiting process in a state in which a steered wheel and a steering shaft are mechanically separated. The blocking force applying process is a process of applying a blocking torque to the steering shaft by operating a motor, the blocking torque being a torque that inhibits a driver from rotating the steering shaft. The blocking force limiting process is a process of limiting the magnitude of the blocking torque toward a smaller side when a force applied by the driver to the steering shaft weakens while the blocking force applying process is being executed.

### BRIEF DESCRIPTION OF THE DRAWINGS

[FIG. 1] FIG. 1 is a diagram illustrating the configuration of a steering system according to a first embodiment.
[FIG. 2] FIG. 2 is an exploded perspective view illustrating a partial configuration of a reaction force actuator included in the steering system shown in FIG. 1.
[FIG. 3] FIG. 3 is a sectional view illustrating a partial configuration of the reaction force actuator included in the steering system shown in FIG. 1.
[FIG. 4] FIG. 4 is a diagram illustrating operation of a stopper function of the reaction force actuator shown in FIG. 2.
[FIG. 5] FIG. 5 is a block diagram illustrating details of part of processing executed by a control device shown in FIG. 1.
[FIG. 6] FIG. 6 is a block diagram illustrating details of an axial force setting process shown in FIG. 5.
[FIG. 7] FIG. 7 is a flowchart illustrating the procedure of an axial force setting process according to a second embodiment.
[FIG. 8] FIG. 8 is a flowchart illustrating the procedure of an axial force setting process according to the second embodiment.
[FIG. 9] FIG. 9 is a flowchart illustrating the procedure of an axial force setting process according to a third embodiment.
[FIG. 10] FIG. 10 is a flowchart illustrating the procedure of an axial force setting process according to the third embodiment.
[FIG. 11] FIG. 11 is a diagram illustrating a method for limiting an end blocking torque according to a modification of the embodiment.
[FIG. 12] FIG. 12 is a diagram illustrating a method for limiting a deviation blocking torque according to a modification of the embodiment.

### MODES FOR CARRYING OUT THE INVENTION

### <First Embodiment>

Hereinafter, a first embodiment will be described with reference to the drawings.

### "Prerequisite Configuration"

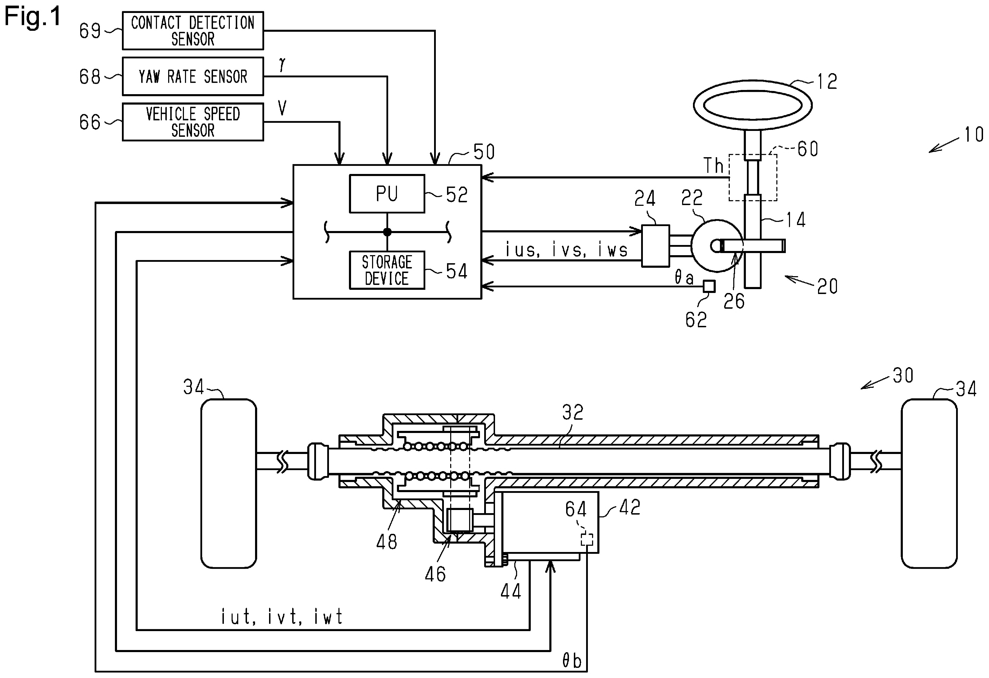

A steering device 10 of a vehicle shown in FIG. 1 is a steer-by-wire device. The steering device 10 includes a steering wheel 12, a steering shaft 14, a reaction force actuator 20, and a steered-side actuator 30. The steering shaft 14 is coupled to the steering wheel 12. The reaction force actuator 20 applies a force that opposes a force applied by a driver through operation of the steering wheel 12. The reaction force actuator 20 includes a reaction force motor 22, a reaction force inverter 24, and a reaction force reduction mechanism 26. The reaction force motor 22 applies a steering reaction force, which is a force opposing steering, to the steering wheel 12 via the steering shaft 14. The reaction force motor 22 is connected to the steering shaft 14 via the reaction force reduction mechanism 26. The reaction motor 22 is, for example, a three-phase synchronous motor. The reaction force reduction mechanism 26 is, for example, a worm and wheel.

The steered-side actuator 30 steers steered wheels 34 according to the driver's steering intention indicated by operation of the steering wheel 12 by the driver. The steered-side actuator 30 includes a rack shaft 32, a steered-side motor 42, a steered-side inverter 44, a steered-side transmission mechanism 46, and a conversion mechanism 48. The steered-side motor 42 is, for example, a three-phase surface permanent magnet synchronous motor (SPM). The steered-side transmission mechanism 46 is a belt transmission mechanism. Rotational power of the steered-side motor 42 is transmitted to the conversion mechanism 48 by the steered-side transmission mechanism 46. The conversion mechanism 48 converts the transmitted rotational power into power for axial displacement of the rack shaft 32. The steered wheels 34 are steered by the axial displacement of the rack shaft 32.

A steering control device 50 includes a PU 52 and a storage device 54. The PU 52 is a software processing device such as a CPU or a GPU. The storage device 54 may be an electrically non-rewritable nonvolatile memory. Alternatively, the storage device 54 may be an electrically rewritable nonvolatile memory or a storage medium such as a disk medium.

Objects to be controlled by the steering control device 50 are the steering wheel 12 and the steered wheels 34. The steering control device 50 controls a steering reaction force that opposes steering by a driver, that is, a controlled variable of the steering wheel 12. The steering control device 50 also controls a steered angle that is a controlled variable of the steered wheels 34. The steered angle is a turning angle of tires serving as the steered wheels 34.

For control of the controlled variables, the steering control device 50 refers to steering torque Th detected by a torque sensor 60. The steering torque Th is a torque applied by the driver to the steering shaft 14 through operation of the steering wheel 12. For control of the controlled variables, the steering control device 50 refers to a rotation angle θa detected by a steering-side rotation angle sensor 62, namely an angle of a rotation shaft of the reaction force motor 22. For control of the controlled variables, the steering control device 50 also refers to currents ius, ivs, iws flowing through the reaction force motor 22. The currents ius, ivs, iws may be detected, for example, as voltage drops across shunt resistors provided in respective legs of the reaction force inverter 24. For control of the controlled variables, the steering control device 50 refers to a rotation angle θb detected by a steered-side rotation angle sensor 64, namely an angle of a rotation shaft of the steered-side motor 42. For control of the controlled variables, the steering control device 50 also refers to currents iut, ivt, iwt flowing through the steered-side motor 42. The currents iut, ivt, iwt may be detected, for example, as voltage drops across shunt resistors provided in respective legs of the steered-side inverter 44. The steering control device 50 refers to a vehicle speed V detected by a vehicle speed sensor 66. The steering control device 50 refers to a yaw rate γ detected by a yaw rate sensor 68. The steering control device 50 refers to a detection signal of a contact detection sensor 69 that senses whether a human hand is touching the steering wheel 12. The contact detection sensor 69 may be a sensor that senses a change in a physical quantity related to the steering wheel 12. As used herein, the physical quantity may be capacitance, load, or the like. Alternatively, the contact detection sensor 69 may be a sensor that captures an image of an area near the steering wheel 12. In that case, the detection signal of the contact detection sensor 69 is image data.

### "Configuration of Reaction Force Actuator 20"

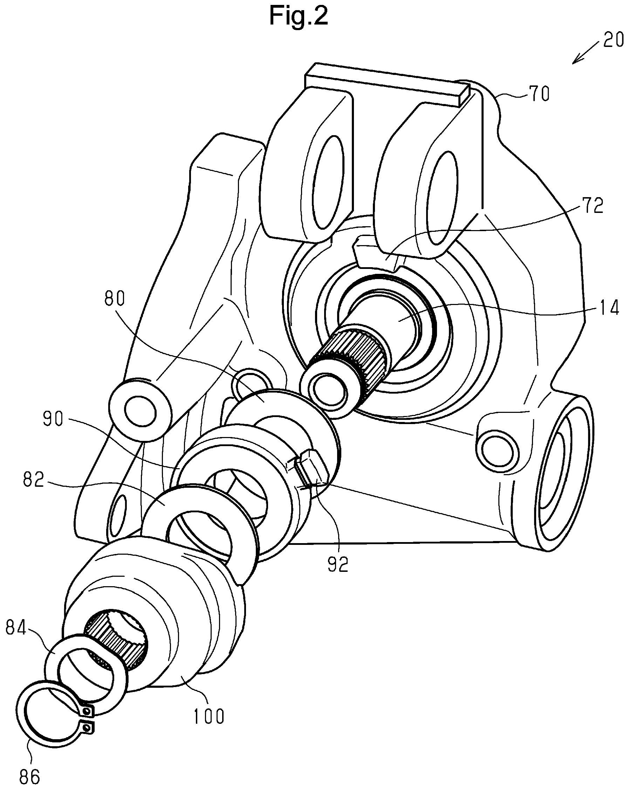

FIG. 2 illustrates a partial configuration of the reaction force actuator 20. As shown in FIG. 2, the reaction force actuator 20 includes a housing 70 fixed to the vehicle. The steering shaft 14 is inserted into the housing 70. The housing 70 rotatably supports the steering shaft 14. The steering shaft 14 is inserted into a plurality of ring-shaped members. The ring-shaped members include a washer 80, an intermediate stopper 90, a washer 82, an end stopper 100, a wave washer 84, and a C-shaped snap ring 86.

The housing 70 is provided with a protrusion 72 as a restricting member that restricts rotation of the intermediate stopper 90. The intermediate stopper 90 includes a protrusion 92 whose rotation is restricted by the protrusion 72.

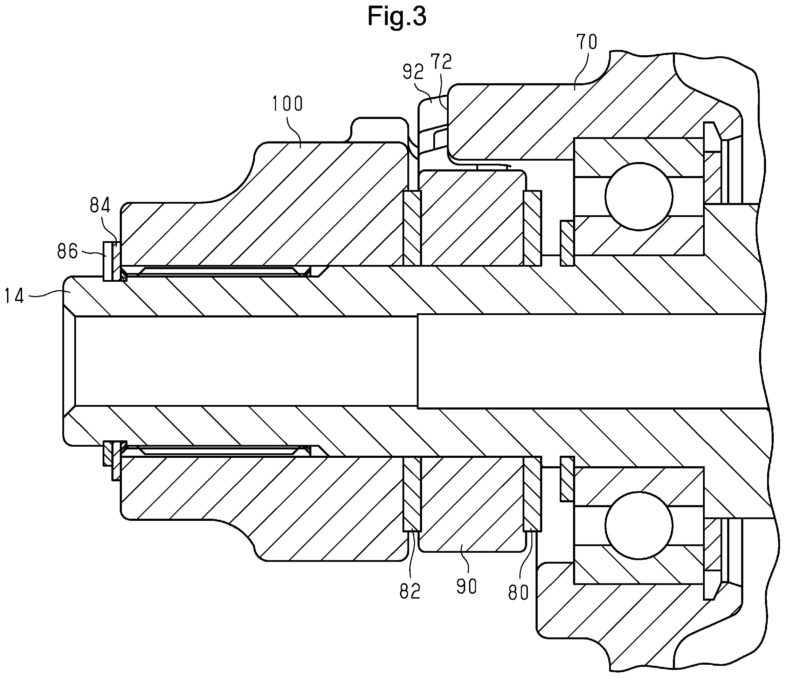

FIG. 3 illustrates a partial sectional configuration of the reaction-force actuator 20. As shown in FIG. 3, an elastic force toward the right in the drawing is applied by the wave washer 84 to the end stopper 100. As a result, an elastic force toward the right in the drawing is applied to the intermediate stopper 90 via the washer 82. The steering shaft 14 has a reduced-diameter portion at a left end portion in the drawing. The washer 80, the intermediate stopper 90, and the washer 82 are arranged at the reduced-diameter portion of the steering shaft 14. Therefore, displacement of the washer 80 toward the right in the drawing is restricted. Accordingly, the intermediate stopper 90 is subjected to an elastic force toward the right in the drawing via the washer 82 and to an elastic force toward the left in the figure via the washer 80.

The end stopper 100 is fixed to the steering shaft 14. Accordingly, the end stopper 100 rotates together with the steering shaft 14 as the steering shaft 14 rotates. As the end stopper 100 rotates, the intermediate stopper 90 is carried around by the end stopper 100.

### "Restriction of Rotation of Steering Shaft 14"

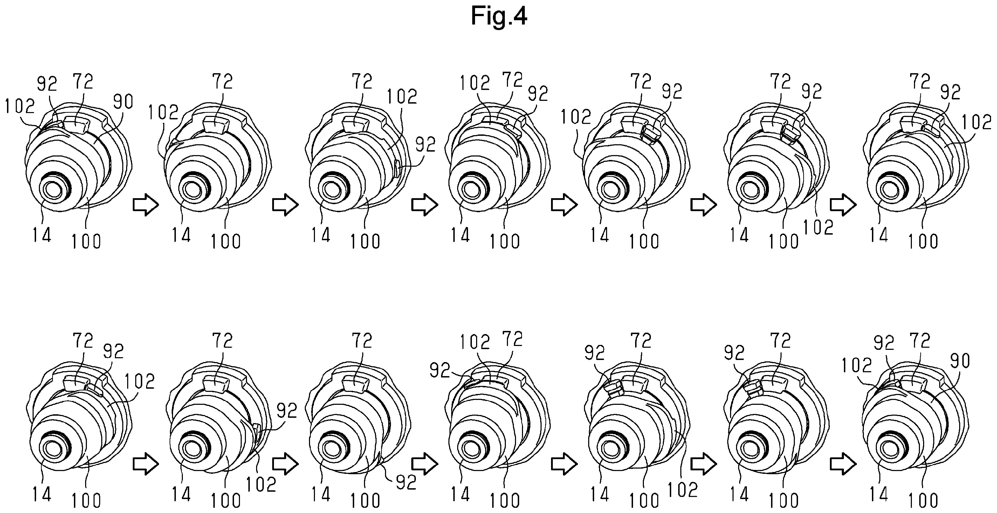

FIG. 4 illustrates operation of the intermediate stopper 90 accompanying rotation of the steering shaft 14. The upper row of FIG. 4 shows a case where the steering shaft 14 rotates toward a right-turn side. The leftmost illustration in the upper row of FIG. 4 shows a state in which a steering angle θs, which is a rotation angle of the steering shaft 14, is a value corresponding to an end position on a left-turn side. In the upper row of FIG. 4, states in which the steering shaft 14 rotates toward the right-turn side are shown from left to right in the drawing. In particular, the rightmost illustration in the upper row of FIG. 4 shows a state in which the steering angle θs corresponds to an end position on the right-turn side.

As shown in the upper row of FIG. 4, when the steering shaft 14 rotates rightward from the end position on the left-turn side, the intermediate stopper 90 is carried around with rotation of the end stopper 100. The middle illustration in the upper row of FIG. 4 shows a state in which the protrusion 92 of the intermediate stopper 90 contacts the protrusion 72 of the housing 70. As a result, further rightward rotation of the intermediate stopper 90 is restricted. Accordingly, the end stopper 100 rotates alone as the steering shaft 14 rotates. When the steering shaft 14 rotates further and a protrusion 102 of the end stopper 100 contacts the protrusion 92 of the intermediate stopper 90, further rightward rotation of the end stopper 100 is restricted. This state is shown in the rightmost illustration of the upper row of FIG. 4. In this state, further rightward of the steering shaft 14 is restricted. The steering angle θs at this time corresponds to an upper limit value on the right-turn side.

The lower row of FIG. 4 shows a case where the rotation angle of the steering shaft 14 rotates toward the left-turn side. The leftmost illustration in the lower row of FIG. 4 shows a state in which the steering angle θs corresponds to the end position on the right-turn side. In the lower row of FIG. 4, states in which the steering shaft 14 rotates toward the left-turn side are shown from left to right in the drawing. In particular, the rightmost illustration in the lower row of FIG. 4 shows a state in which the steering angle θs corresponds to the end position on the left-turn side.

As shown in the lower row of FIG. 4, when the steering shaft 14 rotates leftward from the end position on the right-turn side, the intermediate stopper 90 is carried around with rotation of the end stopper 100. The middle illustration in the lower row of FIG. 4 shows a state in which the protrusion 92 of the intermediate stopper 90 contacts the protrusion 72 of the housing 70. As a result, further leftward rotation of the intermediate stopper 90 is restricted. Accordingly, the end stopper 100 rotates alone as the steering shaft 14 rotates. When the steering shaft 14 rotates further and the protrusion 102 of the end stopper 100 contacts the protrusion 92 of the intermediate stopper 90, further leftward rotation of the end stopper 100 is restricted. This state is shown in the rightmost illustration of the lower row of FIG. 4. In this state, further leftward rotation of the steering shaft 14 is restricted. The steering angle θs at this time corresponds to an upper limit value on the left-turn side.

### "Overview of Control"

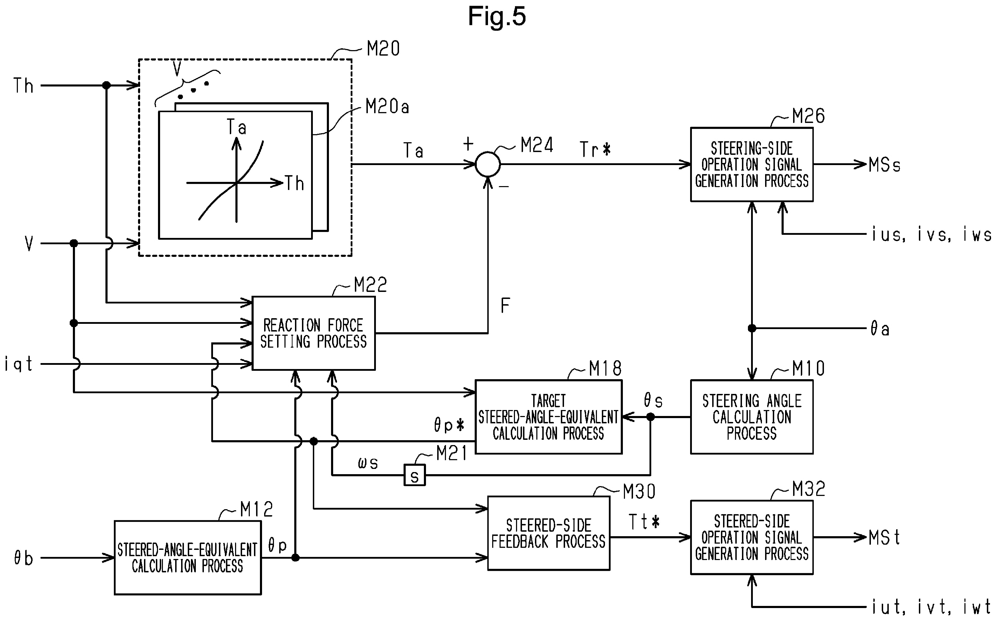

FIG. 5 illustrates processes executed by the steering control device 50. The processes shown in FIG. 5 are implemented by the PU 52 repeatedly executing, for example, at predetermined intervals, a program stored in the storage device 54.

A steering angle calculation process M10 includes a process of converting the rotation angle θa into, for example, a cumulative angle including a range exceeding 360 degrees by counting the number of rotations of the reaction force motor 22 from a steering neutral position, which is a position of the steering wheel 12 when the vehicle is traveling straight. The steering angle calculation process M10 includes a process of calculating the steering angle θs by multiplying the cumulative angle obtained by the conversion by a conversion coefficient based on the rotational speed ratio of the reaction force reduction mechanism 26.

A steered-angle-equivalent calculation process M12 includes a process of converting the rotation angle θb into, for example, a cumulative angle including a range exceeding 360 degrees by counting the number of rotations of the steered-side motor 42 from a rack neutral position, which is a position of the rack shaft 32 when the vehicle is traveling straight. The steered-angle-equivalent calculation process M12 includes a process of calculating a steered-angle-equivalent θp corresponding to the steered angle of the steered wheels 34 by multiplying the cumulative angle obtained by the conversion by a conversion coefficient according to, for example, the reduction ratio of the steered-side transmission mechanism 46 and the lead of the conversion mechanism 48. The steered-angle-equivalent θp is a quantity proportional to the steered angle. As one example, the steered-angle-equivalent θp is defined to be positive when it is an angle on the right side relative to the rack neutral position, and negative when it is an angle on the left side relative to the rack neutral position.

A target steered-angle-equivalent calculation process M18 is a process of calculating a target steered-angle-equivalent θp* according to the steering angle θs and the vehicle speed V. An assist amount setting process M20 is a process of calculating an assist amount Ta using the steering torque Th and the vehicle speed V as inputs. The assist amount Ta is an amount in the same direction as the steering direction of the driver. The magnitude of the assist amount Ta is set to a larger value when a force assisting steering by the driver is increased. The assist amount setting process M20 is a process in which the PU 52 calculates the assist amount Ta by map calculation, with map data M20a stored in the storage device 54. The map data M20a is data in which the steering torque Th and the vehicle speed V are input variables and the assist amount Ta is an output variable.

The map data is a set of data including discrete values of the input variables and values of the output variable respectively corresponding to the values of the input variables. The map calculation may be a process in which, when the values of the input variables match any of the values of the input variables in the map data, the corresponding value of the output variable in the map data is output as a calculation result. The map calculation may be a process in which, when the values of the input variables do not match any of the values of the input variables in the map data, a value obtained by interpolating a plurality of values of the output variable included in the map data is output as a calculation result. Alternatively, the map calculation may be a process in which, when the values of the input variables do not match any of the values of the input variables in the map data, the value of the output variable in the map data that corresponds to the closest values among the plurality of values of the input variables included in the map data, is output as a calculation result.

An angular velocity calculation process M21 is a process in which the steering angle θs is used as an input and a steering angular velocity ωs is output. For example, the angular velocity calculation process M21 may be a process of assigning an amount of change in the steering angle θs per unit time to the steering angular velocity ωs.

A reaction force setting process M22 is a process of calculating a reaction force F that is a force opposing a force applied by the driver to the steering wheel 12. A subtraction process M24 is a process of assigning a value obtained by subtracting the reaction force F from the assist amount Ta to a target reaction torque Tr*. The target reaction torque Tr* is a target value of a torque applied by the reaction force motor 22 to the steering shaft 14.

A steering-side operation signal generation process M26 is a process of generating an operation signal MSs for the reaction force inverter 24 to control the torque of the reaction force motor 22 such that the torque applied to the steering shaft 14 becomes the target reaction torque Tr*. Specifically, the steering-side operation signal generation process M26 includes a process of converting the target reaction torque Tr* into a target torque of the reaction force motor 22. The steering-side operation signal generation process M26 includes a process of calculating the operation signal MSs for the reaction force inverter 24 by feedback control of currents such that currents flowing through the reaction force motor 22 approach currents determined from the target reaction torque Tr*. In practice, the operation signal MSs is an operation signal for each of six switching elements of the reaction force inverter 24. When the torque of the reaction force motor 22 is set to the target reaction torque Tr*, the absolute value of a steering reaction force opposing a rotational force applied to the steering wheel 12 becomes equal to the absolute value of the target reaction torque Tr*. The sign of the steering reaction force opposing the rotational force applied to the steering wheel 12 is normally opposite to the sign of the assist amount Ta. This is because the absolute value of the reaction force F is normally larger than the absolute value of the assist amount Ta.

A steered-side feedback process M30 is a process of assigning, to a target steered-side torque Tt*, a manipulated variable of feedback control in which the steered-angle-equivalent θp is a controlled variable and the target steered-angle-equivalent θp* is a target value of the controlled variable. The target steered-side torque Tt* has a constant ratio to the torque of the steered-side motor 42.

A steered-side operation signal generation process M32 is a process of generating an operation signal MSt for the steered-side inverter 44 to control the torque of the steered-side motor 42 such that the torque of the steered-side motor 42 becomes a value having a constant ratio to the target steered-side torque Tt*. Specifically, the steered-side operation signal generation process M32 includes a process of converting the target steered-side torque Tt* into a target torque of the steered-side motor 42. The steered-side operation signal generation process M32 includes a process of calculating the operation signal MSt for the steered-side inverter 44 by feedback control of currents such that currents flowing through the steered-side motor 42 approach currents determined from the target torque. In practice, the operation signal MSt is an operation signal for each of six switching elements of the steered-side inverter 44.

### "Details of Reaction Force Setting Process"

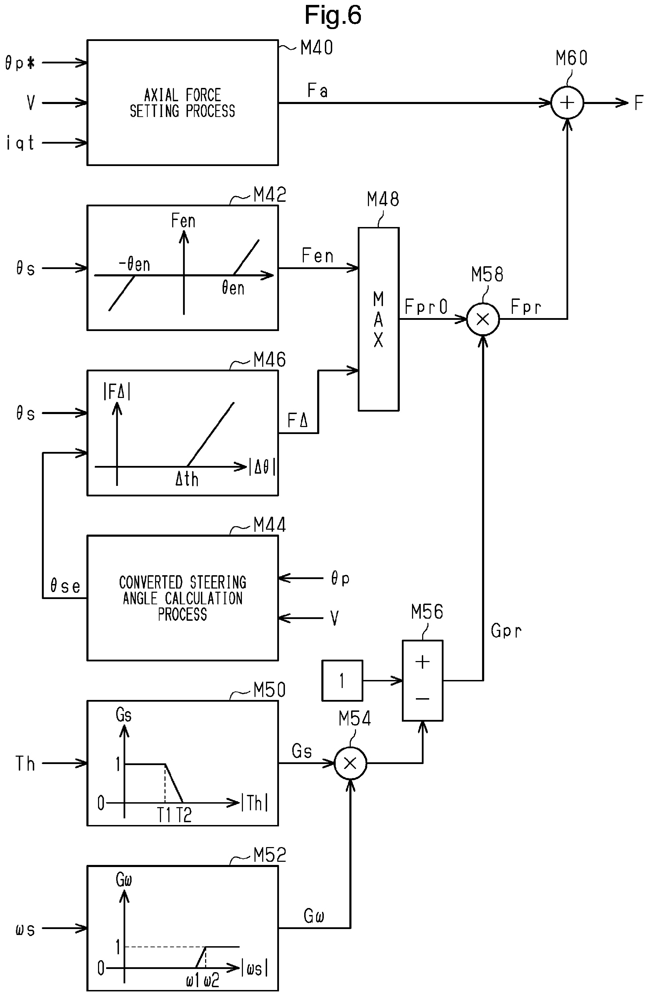

FIG. 6 illustrates details of the reaction force setting process M22. An axial force setting process M40 is a process of calculating an axial force Fa acting on the rack shaft 32 via the steered wheels 34, using the vehicle speed V, a q-axis current iqt of the steered-side motor 42, and the target steered-angle-equivalent θp* as inputs. The axial force Fa is a value representing, through control, a force acting on the rack shaft 32 via the steered wheels 34. However, the axial force Fa need not be intended to estimate the force acting on the rack shaft 32 with high accuracy. The axial force Fa may be, for example, a virtually defined value representing a force acting on the rack shaft 32. The axial force Fa is converted into a torque applied to the steering shaft 14. That is, it is converted into a torque applied to the steering shaft 14 under the assumption that power transmission between the steered wheels 34 and the steering shaft 14 is possible. The axial force Fa is a quantity that acts in a direction opposite to the steering direction of the driver.

The axial force setting process M40 includes a process of assigning a weighted average value of an angle axial force Fθ and a current axial force Fi to the axial force Fa. The angle axial force Fθ is calculated by the PU 52 according to the target steered-angle-equivalent θp* and the vehicle speed V. The current axial force Fi is calculated by the PU 52 according to the q-axis current iqt.

The axial force setting process M40 may be a process of changing the angle axial force Fθ according to the target steered-angle-equivalent θp* under a condition that the absolute value of the angle axial force Fθ when the absolute value of the target steered-angle-equivalent θp* is large is greater than or equal to the absolute value of the angle axial force Fθ when the absolute value of the target steered-angle-equivalent θp* is small. The axial force setting process M40 may be a process of changing the angle axial force Fθ according to the vehicle speed V under a condition that the absolute value of the angle axial force Fθ when the vehicle speed V is large is greater than or equal to the absolute value of the angle axial force Fθ when the vehicle speed V is small. The axial force setting process M40 may be a process of changing the current axial force Fi according to the q-axis current iqt under a condition that the absolute value of the current axial force Fi when the absolute value of the q-axis current iqt is large is greater than or equal to the absolute value of the current axial force Fi when the absolute value of the q-axis current iqt is small. The q-axis current iqt is calculated by the PU 52 according to the steered-angle-equivalent θp and the currents iut, ivt, iwt.

In the description "changing B according to A under a condition that B when A is large is greater than or equal to B when A is small," the expressions "A is large" and "A is small" indicate a relative magnitude relationship when the two are compared. For example, "A is large" corresponds to a case where "A is a first value," and "A is small" corresponds to a case where "A is a second value smaller than the first value." The above description means that, depending on the settings of the first value and the second value, B when A is the first value may be larger than B when A is the second value. This description also means that B is changed according to A such that A when B is large becomes larger than A when B is small.

An end blocking torque setting process M42 is a process of setting an end blocking torque Fen, namely a torque for inhibiting the driver from rotating the steering shaft 14 to such an extent that the absolute value of the steering angle θs becomes excessively large. The end blocking torque setting process M42 is a process of setting the magnitude of the end blocking torque Fen to a value greater than zero when the absolute value of the steering angle θs is greater than or equal to an end threshold θen. The end blocking torque setting process M42 is a process of changing, under the following condition, the end blocking torque Fen according to the steering angle θs when the absolute value of the steering angle θs is greater than or equal to the end threshold θen. This condition is that the absolute value of the end blocking torque Fen when the absolute value of the steering angle θs is large is greater than or equal to the absolute value of the end blocking torque Fen when the absolute value of the steering angle θs is small. The end threshold θen is set to a value smaller than the absolute value of a right-turn upper limit of the steering angle θs shown in the upper row of FIG. 4 and the absolute value of a left-turn upper limit of the steering angle θs shown in the lower row of FIG. 4.

A converted steering angle calculation process M44 is a process in which the vehicle speed V and the steered-angle-equivalent θp are used as inputs and a converted steering angle θse is output. The converted steering angle θse is the steering angle θs used as an input to the target steered-angle-equivalent calculation process M18 when the target steered-angle-equivalent θp* is set to the steered-angle-equivalent θp by the target steered-angle-equivalent calculation process M18.

A deviation blocking torque setting process M46 is a process in which the steering angle θs and the converted steering angle θse are used as inputs and a deviation blocking torque FΔ is output. The deviation blocking torque FΔ is a torque for inhibiting the absolute value of a deviation between the steering angle θs and the converted steering angle θse from becoming excessively large when the steering shaft 14 is rotated by the driver. The deviation blocking torque setting process M46 includes a process of calculating a deviation Δθ, which is a value obtained by subtracting the converted steering angle θse from the steering angle θs. The deviation blocking torque setting process M46 is a process of making the absolute value of the deviation blocking torque FΔ greater than zero when the absolute value of the deviation Δθ is greater than or equal to a threshold Δth. In other words, the deviation blocking torque setting process M46 is a process of making the absolute value of the deviation blocking torque FΔ greater than zero when the absolute value of the difference between a target steered angle determined by the target steered-angle-equivalent θp* and the steered angle of the steered wheels 34 is greater than or equal to a threshold. The deviation blocking torque setting process M46 is a process of changing, under the following condition, the deviation blocking torque FΔ according to the deviation Δθ when the absolute value of the deviation Δθ is greater than or equal to the threshold Δth. This condition is that the absolute value of the deviation blocking torque FΔ when the absolute value of the deviation Δθ is large is greater than or equal to the absolute value of the deviation blocking torque FΔ when the absolute value of the deviation Δθ is small.

A selection process M48 is a process of assigning the value of the larger of two torques, namely the end blocking torque Fen and the deviation blocking torque FΔ, to a blocking torque Fpr0. A steering gain setting process M50 is a process in which the steering torque Th is used as an input and a steering gain Gs is output. The steering gain setting process M50 includes a process of setting the steering gain Gs to "1" when the absolute value of the steering torque Th is less than or equal to a first threshold T1. The steering gain setting process M50 includes a process of setting the steering gain Gs to "0" when the absolute value of the steering torque Th is greater than or equal to a second threshold T2. The steering gain setting process M50 includes a process of changing, under the following condition, the steering gain Gs according to the absolute value of the steering torque Th when the absolute value of the steering torque Th is greater than the first threshold T1 and less than the second threshold T2. This condition is that the steering gain Gs when the absolute value of the steering torque Th is large is less than or equal to the steering gain Gs when the absolute value of the steering torque Th is small.

A speed gain setting process M52 is a process in which the steering angular velocity ωs is used as an input and a speed gain Gω is output. The speed gain setting process M52 includes a process of setting the speed gain Gω to "0" when the absolute value of the steering angular velocity ωs is less than or equal to a first threshold ω1. The speed gain setting process M52 includes a process of setting the speed gain Gω to "1" when the absolute value of the steering angular velocity ωs is greater than or equal to a second threshold ω2. The speed gain setting process M52 includes a process of changing, under the following condition, the speed gain Gω according to the absolute value of the steering angular velocity ωs when the absolute value of the steering angular velocity ωs is greater than the first threshold ω1 and less than the second threshold ω2. This condition is that the speed gain Gω when the absolute value of the steering angular velocity ωs is large is less than or equal to the speed gain Gω when the absolute value of the steering angular velocity ωs is small.

A multiplication process M54 is a process of calculating the product of the steering gain Gs and the speed gain Gω. A blocking gain calculation process M56 is a process of assigning, to a blocking gain Gpr, a value obtained by subtracting the product of the steering gain Gs and the speed gain Gω from "1."

A blocking torque calculation process M58 is a process of assigning, to a blocking torque Fpr, a value obtained by multiplying the blocking torque Fpr0 by the blocking gain Gpr. A reaction force calculation process M60 is a process of assigning, to the reaction force F, a value obtained by adding the blocking torque Fpr to the axial force Fa.

The blocking force applying process corresponds to the steering-side operation signal generation process M26 when the absolute value of the blocking torque Fpr is greater than zero. The blocking force limiting process corresponds to the steering gain setting process M50, the speed gain setting process M52, the multiplication process M54, the blocking gain calculation process M56, and the blocking torque calculation process M58.

### "Functions and Effects of Embodiment"

The PU 52 executes control for inhibiting the absolute value of the steering angle θs from further increasing beyond the end threshold θen, which is an upper limit value in control. Specifically, when the absolute value of the steering angle θs becomes greater than or equal to the end threshold θen, the PU 52 superimposes the end blocking torque Fen on the reaction force F. Accordingly, when the driver operates the steering wheel 12 in a direction that further increases the absolute value of the steering angle θs in a region where the absolute value of the steering angle θs is greater than or equal to the end threshold θen, the absolute value of the end blocking torque Fen becomes large. If the driver releases the steering wheel 12 in this state, there is a possibility that the steering wheel 12 may be displaced toward the neutral position at an excessively high speed when the steering gain Gs and the speed gain Gω are not used.

In contrast, in the present embodiment, when the driver releases the steering wheel 12, the PU 52 sets the steering gain Gs to a value greater than "0." When the speed at which the steering wheel 12 moves toward the neutral position increases due to the blocking torque Fpr, the PU 52 sets the speed gain Gω to a value greater than "0." As a result, the blocking gain Gpr becomes smaller than "1." Therefore, the magnitude of the blocking torque Fpr is limited to a value smaller than the magnitude of the blocking torque Fpr0.

The PU 52 executes control for inhibiting the converted steering angle θse from deviating significantly from the steering angle θs. Specifically, when the absolute value of the deviation Δθ becomes greater than or equal to the threshold Δth, the PU 52 superimposes the deviation blocking torque FΔ on the reaction force F. Accordingly, for example, when the steered wheels 34 cannot be steered according to the target steered-angle-equivalent θp by the torque of the steered-side motor 42, for example, due to a curb etc., the absolute value of the deviation blocking torque FΔ becomes large. If the driver releases the steering wheel 12 in this state, there is a possibility that the steering wheel 12 may be displaced at an excessively high speed when the steering gain Gs and the speed gain Gω are not used.

In contrast, in the present embodiment, when the driver releases the steering wheel 12, the PU 52 sets the steering gain Gs to a value greater than "0." When the speed at which the steering wheel 12 moves due to the blocking torque Fpr, the PU 52 sets the speed gain Gω to a value greater than "0." As a result, the blocking gain Gpr becomes smaller than "1." Therefore, the magnitude of the blocking torque Fpr is limited to a value smaller than the magnitude of the blocking torque Fpr0.

The embodiment described above further provides the following functions and effects.
(1-1) When the absolute value of the steering torque Th is greater than the first threshold T1 and less than the second threshold T2, the PU 52 changes, under the following condition, the blocking gain Gpr according to the absolute value of the steering torque Th. That is, the PU 52 changes the blocking gain Gpr under the condition that the blocking gain Gpr when the absolute value of the steering torque Th is small is less than or equal to the blocking gain Gpr when the absolute value of the steering torque Th is large. Accordingly, the absolute value of the blocking torque Fpr is changed according to the absolute value of the steering torque Th under the condition that the absolute value of the blocking torque Fpr when the absolute value of the steering torque Th is small is less than or equal to the absolute value of the blocking torque Fpr when the absolute value of the steering torque Th is large. Abrupt change in the blocking torque Fpr can thus be suppressed compared with a case where the blocking gain Gpr is switched stepwise between "0" and "1."
(1-2) When the absolute value of the steering angular velocity ωs is greater than the first threshold ω1 and less than the second threshold ω2, the PU 52 changes, under the following condition, the blocking gain Gpr according to the absolute value of the steering angular velocity ωs. That is, the PU 52 changes the blocking gain Gpr under the condition that the blocking gain Gpr when the absolute value of the steering angular velocity ωs is large is greater than or equal to the blocking gain Gpr when the absolute value of the steering angular velocity ωs is small. Accordingly, the blocking torque Fpr is changed according to the absolute value of the steering angular velocity ωs under the condition that the absolute value of the blocking torque Fpr when the absolute value of the steering angular velocity ωs is large is less than or equal to the absolute value of the blocking torque Fpr when the absolute value of the steering angular velocity ωs is small. Abrupt change in the blocking torque Fpr can thus be suppressed compared with a case where the blocking gain Gpr is switched stepwise between "0" and "1" according to the absolute value of the steering angular velocity ωs.

### <Second Embodiment>

Hereinafter, a second embodiment will be described with reference to the drawings, focusing on differences from the first embodiment.

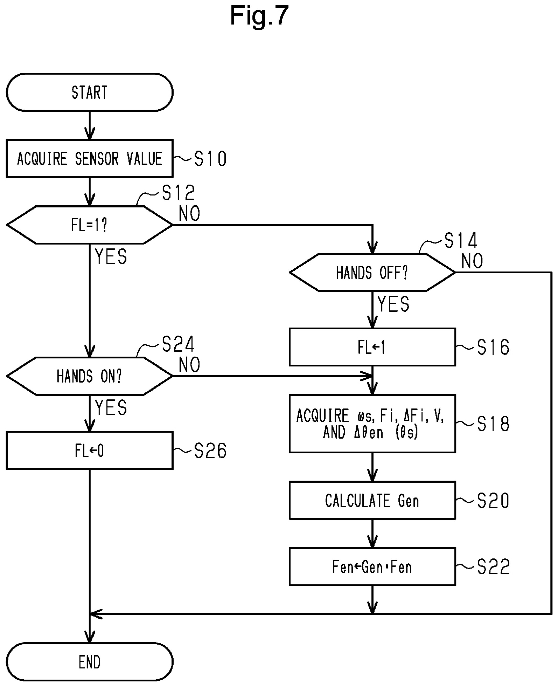

In the present embodiment, the PU 52 executes, upstream of the selection process M48, a process of limiting the end blocking torque Fen and the deviation blocking torque FΔ using a gain. FIG. 7 illustrates the procedure of a process of limiting the magnitude of the end blocking torque Fen according to the present embodiment. The process shown in FIG. 7 is implemented by the PU 52 repeatedly executing, for example, at predetermined intervals, a program stored in the storage device 54. In the following description, the numbers preceded by the letter "S" indicate step numbers of each process.

In the series of processes shown in FIG. 7, the PU 52 first acquires a detection value of the contact detection sensor 69 (S10). Next, the PU 52 determines whether a limitation flag FL is "1" (S12). When the limitation flag FL is "1," this indicates that a process of limiting the magnitude of the blocking torque Fpr toward a smaller side is being executed. When the limitation flag FL is "0," this indicates that the process of limiting the magnitude of the blocking torque Fpr toward the smaller side is not being executed. When the PU 52 determines that the limitation flag FL is "0" (S12: NO), the PU 52 determines whether the detection value acquired in the process of S10 indicates that the driver has released the steering wheel 12 (S14). When the PU 52 determines that the detection value indicates that the driver has released the steering wheel 12 (S14: YES), the PU 52 assigns "1" to the limitation flag FL (S16).

The PU 52 then acquires the steering angular velocity ωs, the current axial force Fi, a current axial force change amount ΔFi, the vehicle speed V, and an end excess amount Δθen (steering angle θs) (S18). The current axial force Fi is a variable indicating a force applied to the steered wheels 34. The current axial force change amount ΔFi is an amount of change in the current axial force Fi per unit time. The current axial force change amount ΔFi is calculated by the PU 52. The end excess amount Δθen indicates an amount by which the absolute value of the steering angle θs exceeds the end threshold θen. When the absolute value of the steering angle θs is less than or equal to the end threshold θen, the end excess amount Δθen is zero. The end excess amount Δθen is calculated by the PU 52 when the PU 52 acquires the end excess amount Δθen instead of the steering angle θs in the process of S18.

The PU 52 calculates an end gain Gen according to the values of the variables acquired in the process of S18 (S20). The end gain Gen is a value greater than or equal to "0" and less than "1." The PU 52 may change the end gain Gen according to the steering angular velocity ωs under the condition that the end gain Gen when the absolute value of the steering angular velocity ωs is large is less than or equal to the end gain Gen when the absolute value of the steering angular velocity ωs is small. The process of S20 may be a process in which the PU 52 calculates the end gain Gen by map calculation, with map data stored in the storage device 54. The map data is data in which the steering angular velocity ωs, the current axial force Fi, the current axial force change amount ΔFi, the vehicle speed V, and the end excess amount Δθen (steering angle θs) are input variables and the end gain Gen is an output variable.

The PU 52 assigns, to the end blocking torque Fen, a value obtained by multiplying the end blocking torque Fen set in the end blocking torque setting process M42 by the end gain Gen (S22).

On the other hand, when the PU 52 determines that the limitation flag FL is "1" (S12: YES), the PU 52 determines whether the detection value acquired in the process of S10 indicates that the driver is touching the steering wheel 12 (S24). When a negative determination is made by the PU 52 in the process of S24, the process proceeds to S18. When the PU 52 determines that the detection value indicates that the driver is touching the steering wheel 12 (S24: YES), the PU 52 assigns "0" to the limitation flag FL (S26).

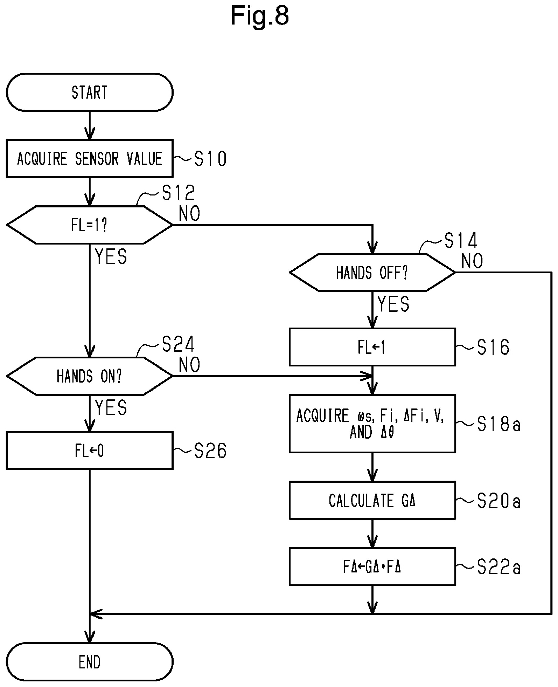

When the process of S22 or S26 is completed, or when a negative determination is made in the process of S14, the PU 52 temporarily terminates the series of processes shown in FIG. 7. FIG. 8 illustrates the procedure of a process of limiting the magnitude of the deviation blocking torque FΔ according to the present embodiment. The process shown in FIG. 8 is implemented by the PU 52 repeatedly executing, for example, at predetermined intervals, a program stored in the storage device 54. In FIG. 8, the processes corresponding to those shown in FIG. 7 are denoted by the same step numbers as those in FIG. 7 for convenience.

In the series of processes shown in FIG. 8, when the process of S16 is completed, the PU 52 acquires the steering angular velocity ωs, the current axial force Fi, the current axial force change amount ΔFi, the vehicle speed V, and the deviation Δθ (S18a). The PU 52 then calculates a deviation gain GΔ using, as inputs, the values of the variables acquired in the process of S18a (S20a). The deviation gain GΔ is a value greater than or equal to "0" and less than "1."

The PU 52 may change the deviation gain GΔ according to the steering angular velocity ωs under the condition that the deviation gain GΔ when the absolute value of the steering angular velocity ωs is large is less than or equal to the deviation gain GΔ when the absolute value of the steering angular velocity ωs is small. The process of S20a may be a process in which the PU 52 calculates the deviation gain GΔ by map calculation, with map data stored in the storage device 54. The map data is data in which the steering angular velocity ωs, the current axial force Fi, the current axial force change amount ΔFi, the vehicle speed V, and the deviation Δθ are input variables and the deviation gain GΔ is an output variable.

The PU 52 assigns, to the deviation blocking torque FΔ, a value obtained by multiplying the deviation blocking torque FΔ set in the deviation blocking torque setting process M46 by the deviation gain GΔ (S22a). When the process of S22a is completed, the PU 52 temporarily terminates the series of processes shown in FIG. 8. The blocking force limiting process corresponds to the processes of S18 to S22 and the processes of S18a to S22a. The contact detection process corresponds to the processes of S14 and S24.

### "Functions and Effects of Embodiment"

(2-1) The PU 52 sets the end gain Gen according to the steering angular velocity ωs, the current axial force Fi, the current axial force change amount ΔFi, the vehicle speed V, and the end excess amount Δθen (steering angle θs). Accordingly, the end gain Gen can be set to a more appropriate value compared with a case where the end gain Gen is set regardless of the values of those variables.

(2-2) The PU 52 sets the deviation gain GΔ according to the steering angular velocity ωs, the current axial force Fi, the current axial force change amount ΔFi, the vehicle speed V, and the deviation Δθ. Accordingly, the deviation gain GΔ can be set to a more appropriate value compared with a case where the deviation gain GΔ is set regardless of the values of those variables.

### <Third Embodiment>

Hereinafter, a third embodiment will be described with reference to the drawings, focusing on differences from the second embodiment.

In the present embodiment, whether to execute a process of limiting the magnitude of the end blocking torque Fen and the magnitude of the deviation blocking torque FΔ toward a smaller side is determined without using a detection value of the contact detection sensor 69.

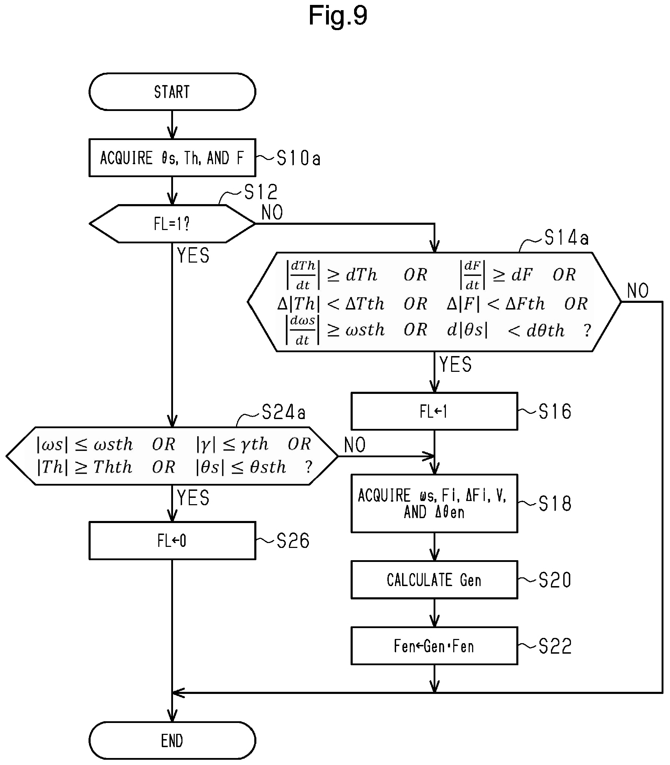

FIG. 9 illustrates the procedure of a process of limiting the magnitude of the end blocking torque Fen according to the present embodiment. The process shown in FIG. 9 is implemented by the PU 52 repeatedly executing, for example, at predetermined intervals, a program stored in the storage device 54. In FIG. 9, the processes corresponding to those shown in FIG. 7 are denoted by the same step numbers as those in FIG. 7 for convenience.

In the series of processes shown in FIG. 9, the PU 52 first acquires the steering angle θs, the steering torque Th, and the reaction force F (S10a). When a negative determination is made in the process of S12, the PU 52 determines whether the logical OR of the following conditions (A) to (F) is true (S14a). The logical OR of conditions (A) to (F) being true is a condition for determining that the driver has released the steering wheel 12 in a situation where the absolute value of the end blocking torque Fen set in the end blocking torque setting process M42 is greater than zero.

Condition (A): a condition that the absolute value of the time derivative of the steering torque Th is greater than or equal to a threshold dTh.
Condition (B): a condition that the absolute value of the time derivative of the reaction force F is greater than or equal to a threshold dF.

Condition (C): a condition that the amount of change over time Δ|Th| in the absolute value of the steering torque Th is smaller than a threshold ΔTth. The threshold ΔTth is set to a value less than or equal to zero.
Condition (D): a condition that the amount of change over time Δ|F| in the absolute value of the reaction force F is smaller than a threshold ΔFth. The threshold ΔFth is set to a value less than or equal to zero.

Condition (E): a condition that the absolute value of the time derivative of the steering angular velocity ωs is greater than or equal to a threshold ωsth.
Condition (F): a condition that the amount of change over time d|θs| in the absolute value of the steering angle θs is smaller than a threshold dθth. The threshold dθth is set to a value less than or equal to zero.

When the PU 52 determines that the logical OR of conditions (A) to (F) is true (S14a: YES), the process proceeds to S16. When the PU 52 determines that the logical OR of conditions (A) to (F) is false (S14a: NO), the series of processes shown in FIG. 9 is temporarily terminated.

On the other hand, when an affirmative determination is made in the process of S12, the PU 52 determines whether the logical OR of the following conditions (G) to (J) is true. The logical OR of conditions (G) to (J) being true is a condition for determining that the driver has touched the steering wheel 12 in a situation where the absolute value of the end blocking torque Fen set in the end blocking torque setting process M42 is greater than zero.

Condition (G): a condition that the absolute value of the steering angular velocity ωs is less than or equal to a threshold ωsth.
Condition (H): a condition that the absolute value of the yaw rate γ is less than or equal to a threshold γth. The PU 52 may set the threshold γth according to the vehicle speed V. More specifically, the PU 52 may change the threshold γth according to the vehicle speed V under the condition that the threshold γth when the vehicle speed V is large is greater than or equal to the threshold γth when the vehicle speed V is small.

Condition (I): a condition that the absolute value of the steering torque Th is greater than or equal to a threshold Thth.
Condition (J): a condition that the absolute value of the steering angle θs is less than or equal to a threshold θsth. The threshold θsth may be equal to the end threshold θen.

When the PU 52 determines that the logical OR of conditions (G) to (J) is true (S24a: YES), the process proceeds to S26. On the other hand, when the PU 52 determines that the logical OR of conditions (G) to (J) is false (S24a: NO), the process proceeds to S18.

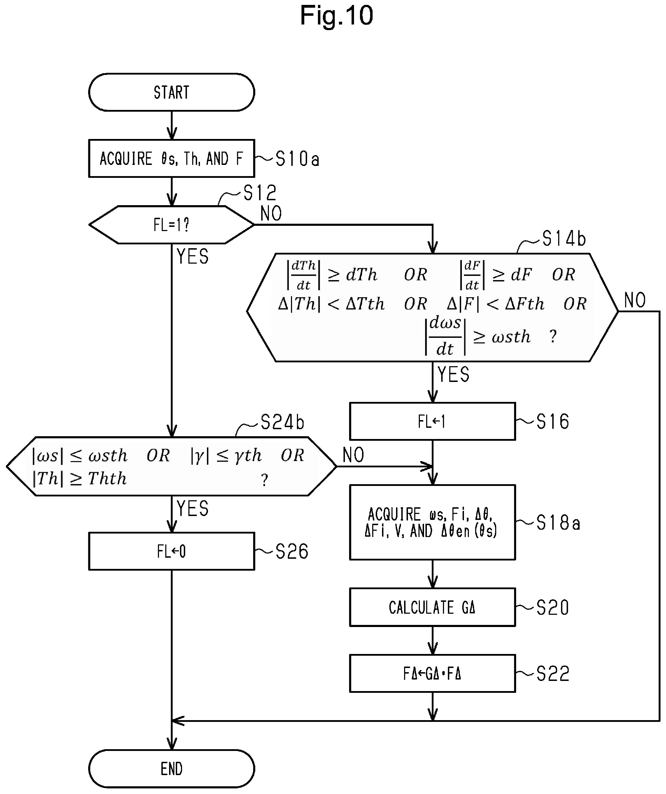

FIG. 10 illustrates the procedure of a process of limiting the magnitude of the deviation blocking torque FΔ according to the present embodiment. The process shown in FIG. 10 is implemented by the PU 52 repeatedly executing, for example, at predetermined intervals, a program stored in the storage device 54. In FIG. 10, the processes corresponding to those shown in FIGS. 8 and 9 are denoted by the same step numbers as those in FIGS. 8 and 9 for convenience.

In the series of processes shown in FIG. 10, when the PU 52 determines that the limitation flag FL is "0" (S12: NO), the PU 52 determines whether the logical OR of conditions (A) to (E) is true (S14b). The logical OR of conditions (A) to (E) being true is a condition for determining that the driver has released the steering wheel 12 in a situation where the absolute value of the deviation blocking torque FΔ set in the deviation blocking torque setting process M46 is greater than zero.

When the PU 52 determines that the logical OR of conditions (A) to (E) is true (S14b: YES), the process proceeds to S16. When the PU 52 determines that the logical OR of conditions (A) to (E) is false (S14b: NO), the series of processes shown in FIG. 10 is temporarily terminated.

On the other hand, when the PU 52 determines that the limitation flag FL is "1" (S12: YES), the PU 52 determines whether the logical OR of conditions (G) to (I) is true. The logical OR of conditions (G) to (I) being true is a condition for determining that the driver has touched the steering wheel 12 in a situation where the absolute value of the deviation blocking torque FΔ set in the deviation blocking torque setting process M46 is greater than zero.

When the PU 52 determines that the logical OR of conditions (G) to (I) is true (S24b: YES), the process proceeds to S26. On the other hand, when the PU 52 determines that the logical OR of conditions (G) to (I) is false (S24b: NO), the process proceeds to S18.

### "Functions and Effects of Embodiment"

(3-1) The PU 52 sets the end gain Gen to a value smaller than "1" when the logical OR of conditions (A) to (F) is true in a situation where the absolute value of the end blocking torque Fen set in the end blocking torque setting process M42 is greater than zero. Accordingly, even without relying on the detection value of the contact detection sensor 69, the magnitude of the end blocking torque Fen can be limited toward a smaller side at an appropriate timing.

(3-2) The PU 52 sets the deviation gain GΔ to a value smaller than "1" when the logical OR of conditions (A) to (E) is true in a situation where the absolute value of the end blocking torque Fen set in the deviation blocking torque setting process M46 is greater than zero. Accordingly, even without relying on the detection value of the contact detection sensor 69, the magnitude of the deviation blocking torque FΔ can be limited toward a smaller side at an appropriate timing.

(3-3) When the PU 52 determines that the logical OR of conditions (G) to (J) is true in a situation where the end gain Gen is set to a value smaller than "1," the PU 52 stops limiting the end blocking torque Fen by the end gain Gen. Accordingly, even without relying on the detection value of the contact detection sensor 69, the process of limiting the magnitude of the end blocking torque Fen toward a smaller side can be stopped at an appropriate timing.

(3-4) When the PU 52 determines that the logical OR of conditions (G) to (I) is true in a situation where the deviation gain GΔ is set to a value smaller than "1," the PU 52 stops limiting the deviation blocking torque FΔ by the deviation gain GΔ. Accordingly, even without relying on the detection value of the contact detection sensor 69, the process of limiting the magnitude of the deviation blocking torque FΔ toward a smaller side can be stopped at an appropriate timing.

### <Other Embodiments>

The above embodiments can be modified as follows. The above embodiments and the following modifications can be combined with each other as long as no technical contradictions arise.

### "Regarding Blocking Force Applying Process"

(a) Regarding deviation blocking torque setting process
   - The deviation blocking torque setting process is not limited to the process shown in FIG. 6. For example, the deviation blocking torque setting process may be a process of assigning, to the deviation blocking torque FΔ, a value obtained by multiplying the deviation Δθ by a coefficient of proportionality.
(b) Regarding end blocking force setting process
   - The end blocking force setting process is not limited to the process shown in FIG. 6. For example, the end blocking force setting process may be a process of assigning, to the end blocking torque Fen, a value obtained by multiplying a value obtained by subtracting the end threshold θen from the steering angle θs by a coefficient of proportionality.
(c) Others
   - The blocking force applying process is not limited to the process of assigning the larger of two torques, namely the deviation blocking torque FΔ and the end blocking torque Fen, to the blocking torque Fpr. For example, the blocking force applying process may be a process of assigning the sum of the deviation blocking torque FΔ and the end blocking torque Fen to the blocking torque Fpr. Alternatively, for example, the blocking force applying process may be configured by the deviation blocking torque setting process alone. Alternatively, for example, the blocking force applying process may be configured by the end blocking force setting process alone.

### "Regarding Blocking Force Limiting Process"

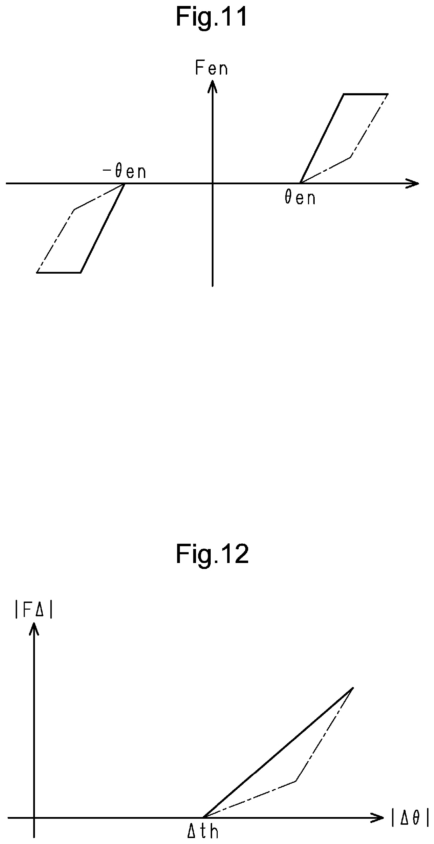

- In FIG. 6, the blocking force limiting process may be changed to a process of switching a map in the end blocking torque setting process M42. That is, as indicated by a long dashed short dashed line in FIG. 11, the end blocking torque Fen may be set to a small value when the absolute value of the steering torque Th is small or when the absolute value of the steering angular velocity ωs is large. Although a polyline whose slope increases when the absolute value of the steering angle θs becomes larger than a predetermined value greater than the end threshold θen is illustrated by the long dashed short dashed line, a downwardly convex curve may be used instead.
- In FIG. 6, the blocking force limiting process may be changed to a process of switching between maps in the deviation blocking torque setting process M46. That is, as indicated by a long dashed short dashed line in FIG. 12, the deviation blocking torque FΔ may be set to a small value when the absolute value of the steering torque Th is small or when the absolute value of the steering angular velocity ωs is large. Although a polyline whose slope increases when the absolute value of the deviation Δθ becomes larger than a predetermined value greater than the threshold Δth is illustrated by the long dashed short dashed line, a downwardly convex curve may be used instead.
- FIG. 6 shows an example in which the blocking gain Gpr is multiplied by the blocking torque Fpr0. However, the present disclosure is not limited to this. For example, a gain corresponding to the blocking gain Gpr may be multiplied by both the end blocking torque Fen and the deviation blocking torque FΔ. In that case, a gain multiplied by the end blocking torque Fen and a gain multiplied by the deviation blocking torque FΔ may be different from each other.
- The process of S14 is not limited to the process in which an output value of a single contact detection sensor 69 is used as an input. For example, the process of S14 may be a process in which values of a plurality of variables corresponding to detection values of a plurality of sensors are used as inputs. The plurality of variables may include, for example, the steering angle θs, the steering torque Th, the vehicle speed V, and the steering angular velocity ωs.
- The process of S24 is not limited to the process in which an output value of a single contact detection sensor 69 is used as an input. For example, the process of S24 may be a process in which values of a plurality of variables corresponding to detection values of a plurality of sensors are used as inputs. The plurality of variables may include, for example, the steering angle θs, the steering torque Th, the vehicle speed V, and the steering angular velocity ωs.
- The process of S14a is not limited to the process of determining whether the logical OR of conditions (A) to (F) is true. For example, the process of S14a may be a process of determining whether the logical OR of two to five conditions selected from the six conditions (A) to (F) is true. Alternatively, for example, the process of S14a may be a process of determining whether any one condition selected from the six conditions (A) to (F) is satisfied.
- The process of S14a may be a process of determining whether the logical AND of conditions (A) to (F) is true. Alternatively, for example, the process of S14a may be a process of determining whether the logical AND of two or more of conditions (A) to (F) is true.
- The process of S24a is not limited to the process of determining whether the logical OR of conditions (G) to (J) is true. For example, the process of S24a may be a process of determining whether the logical OR of two or three conditions selected from the four conditions (G) to (J) is true. Alternatively, for example, the process of S24a may be a process of determining whether any one condition selected from the four conditions (G) to (J) is satisfied.
- The process of S24a may be a process of determining whether the logical AND of conditions (G) to (J) is true. Alternatively, for example, the process of S24a may be a process of determining whether the logical AND of two or more of conditions (G) to (J) is true.
- The process of S14b is not limited to the process of determining whether the logical OR of conditions (A) to (E) is true. For example, the process of S14b may be a process of determining whether the logical OR of two to four conditions selected from the five conditions (A) to (E) is true. Alternatively, for example, the process of S14b may be a process of determining whether any one condition selected from the five conditions (A) to (E) is satisfied.
- The process of S14b may be a process of determining whether the logical AND of conditions (A) to (E) is true. Alternatively, for example, the process of S14b may be a process of determining whether the logical AND of two or more of conditions (A) to (E) is true.
- The process of S24b is not limited to the process of determining whether the logical OR of conditions (G) to (I) is true. For example, the process of S24b may be a process of determining whether the logical OR of any two conditions selected from the three conditions (G) to (I) is true. Alternatively, for example, the process of S24b may be a process of determining whether any one condition selected from the three conditions (G) to (I) is satisfied.
- The process of S24b may be a process of determining whether the logical AND of conditions (G) to (I) is true. Alternatively, for example, the process of S24b may be a process of determining whether the logical AND of any two of conditions (G) to (I) is true.
- FIGS. 7 and 9 illustrate an example in which the process of setting the end gain Gen is a process in which the values of five variables, namely the steering angular velocity ωs, the current axial force Fi, the current axial force change amount ΔFi, the vehicle speed V, and the end excess amount Δθen (steering angle θs), are used as inputs. However, the present disclosure is not limited to this. The process of setting the end gain Gen may be a process in which the values of one to four variables selected from the five variables, namely the steering angular velocity ωs, the current axial force Fi, the current axial force change amount ΔFi, the vehicle speed V, and the end excess amount Δθen (steering angle θs), are used as inputs.
- FIGS. 8 and 10 illustrate an example in which the process of setting the deviation gain GΔ is a process in which the values of five variables, namely the steering angular velocity ωs, the current axial force Fi, the current axial force change amount ΔFi, the vehicle speed V, and the deviation Δθ, are used as inputs. However, the present disclosure is not limited to this. For example, the process of setting the deviation gain GΔ may be a process in which the values of one to four variables selected from the five variables, namely the steering angular velocity ωs, the current axial force Fi, the current axial force change amount ΔFi, the vehicle speed V, and the deviation Δθ, are used as inputs.
- The blocking gain Gpr that is multiplied by the blocking torque Fpr0 is not limited to the variable value calculated by the process shown in FIG. 6. For example, the blocking gain Gpr that is multiplied by the blocking torque Fpr0 may be a variable value calculated based on the values of four variables, namely the steering angular velocity ωs, the current axial force Fi, the current axial force change amount ΔFi, and the vehicle speed V. Alternatively, for example, the blocking gain Gpr that is multiplied by the blocking torque Fpr0 may be a variable value calculated based on the values of one to three variables selected from the four variables, namely the steering angular velocity ωs, the current axial force Fi, the current axial force change amount ΔFi, and the vehicle speed V.

In the above case, a process of multiplying the blocking gain Gpr may be triggered when the logical OR of two to five conditions selected from the five conditions (A) to (E) is true. Here, the logical OR may be read as the logical AND. Alternatively, for example, the process of multiplying the blocking gain Gpr may be triggered when any one of the above five conditions is satisfied.

In the above case, the process of multiplying the blocking gain Gpr may be terminated when the logical OR of two or three conditions selected from the three conditions (G) to (I) is true. Here, the logical OR may be read as the logical AND. Alternatively, for example, the process of multiplying the blocking gain Gpr may be terminated when any one of the three conditions (G) to (I) is satisfied.

### "Regarding Device That Restricts Rotation of Steering Shaft 14"

- The device that restricts rotation of the steering shaft 14 is not limited to the devices exemplified in the above embodiments. For example, an intermediate stopper that is carried around by the end stopper 100 may be omitted.

### "Regarding Steering Control Device"

- The steering control device is not limited to one that executes software processing. For example, the steering control device may include a dedicated hardware circuit such as an ASIC that executes at least part of the processing executed in the above embodiments. That is, the steering control device may include a processing circuit having any of the following configurations (a) to (c): (a) a processing circuit including a processing device that executes all of the above processes according to a program and a program storage device such as a storage device that stores the program, (b) a processing circuit including a processing device and a program storage device that execute part of the above processes according to a program, and a dedicated hardware circuit that executes the remaining processes, and (c) a processing circuit including a dedicated hardware circuit that executes all of the above processes. A plurality of software execution devices each including the processing device and the program storage device may be provided. A plurality of dedicated hardware circuits may be provided.

### "Others"

- In each of the above embodiments, the steering device 10 has a linkless structure in which the steering wheel 12 and the steered wheels 34 are mechanically separated at all times. However, the present disclosure is not limited to this. The steering device 10 may have a structure in which the steering wheel 12 and the steered wheels 34 are mechanically separable by a clutch.

## Claims

1. A steering control device configured to execute a blocking force applying process and a blocking force limiting process in a state in which a steered wheel and a steering shaft are mechanically separated, wherein:
the blocking force applying process is a process of applying a blocking torque to the steering shaft by operating a motor, the blocking torque being a torque that inhibits a driver from rotating the steering shaft; and
the blocking force limiting process is a process of limiting a magnitude of the blocking torque toward a smaller side when a rotational force applied by the driver to the steering shaft weakens while the blocking force applying process is being executed.

2. The steering control device according to claim 1, wherein:
the blocking force limiting process is a process in which steering torque is an input;
and
the blocking force limiting process is configured to be executed when a magnitude of the steering torque is less than or equal to a predetermined value while the blocking force applying process is being executed.

3. The steering control device according to claim 1, wherein:
an input variable of the blocking force limiting process includes a predetermined variable;
the blocking force limiting process is configured to be triggered when a magnitude of the predetermined variable is greater than or equal to a predetermined value while the blocking force applying process is being executed; and
the predetermined variable is any one of three variables, the three variables being a steering angular velocity, a time derivative of steering torque, and a time derivative of the torque applied by the blocking force applying process.

4. The steering control device according to claim 1, wherein:
the steering control device is configured to execute a contact detection process;
the contact detection process is a process of acquiring a detection value of a sensor configured to detect whether a hand of the driver is touching a steering wheel connected to the steering shaft; and
the blocking force limiting process includes a process in which the detection value of the sensor is an input and the magnitude of the blocking torque is limited toward the smaller side when detection is made that the hand of the driver is not touching the steering wheel.

5. The steering control device according to claim 1, wherein the blocking force limiting process includes a process in which at least one of four variables is an input and a degree to which the magnitude of the blocking torque is limited is changed according to the input, the four variables being a steering angular velocity, a vehicle speed, a force applied to the steered wheel, and a time derivative value of the force applied to the steered wheel.

6. The steering control device according to claim 1, wherein:
the steering control device is configured to execute a contact detection process;
the contact detection process is a process of acquiring a detection value of a sensor configured to detect whether a hand of the driver is touching a steering wheel connected to the steering shaft; and
the blocking force limiting process is stopped when detection is made that the hand of the driver is touching the steering wheel.

7. The steering control device according to claim 1, wherein the blocking force limiting process includes a process in which, when a magnitude of steering torque is less than or equal to a predetermined torque and a magnitude of a steering angular velocity is greater than or equal to a predetermined velocity, the blocking torque is set to zero.

8. The steering control device according to claim 7, wherein the blocking force limiting process includes
a process in which, when the steering torque is greater than the predetermined torque, the magnitude of the blocking torque is limited toward the smaller side according to the magnitude of the steering torque under a condition that the magnitude of the blocking torque when the magnitude of the steering torque is small is less than or equal to the magnitude of the blocking torque when the magnitude of the steering torque is large, and
a process in which, when the steering angular velocity is less than the predetermined velocity, the magnitude of the blocking torque is limited toward the smaller side according to the magnitude of the steering angular velocity under a condition that the magnitude of the blocking torque when the magnitude of the steering angular velocity is large is less than or equal to the magnitude of the blocking torque when the magnitude of the steering angular velocity is small.

9. The steering control device according to claim 1, wherein the blocking force applying process is configured to be executed when a magnitude of a steering angle is greater than or equal to an end threshold.

10. The steering control device according to claim 1, wherein the blocking force applying process is configured to be executed when an absolute value of a difference between a target steered angle and a steered angle of the steered wheel is greater than or equal to a threshold.

11. The steering control device according to claim 9, wherein the blocking force limiting process includes a process in which, when the magnitude of the steering angle is greater than or equal to the end threshold, a degree to which the blocking torque is limited toward the smaller side is changed according to either one of two values, the two values being the steering angle or an amount by which the steering angle exceeds the end threshold.

12. A steering control method comprising a step of executing a blocking force applying process and a blocking force limiting process in a state in which a steered wheel and a steering shaft are mechanically separated, wherein:
the blocking force applying process is a process of applying a blocking torque to the steering shaft by operating a motor, the blocking torque being a torque that inhibits a driver from rotating the steering shaft; and
the blocking force limiting process is a process of limiting a magnitude of the blocking torque toward a smaller side when a force applied by the driver to the steering shaft weakens while the blocking force applying process is being executed.
